# EUROPEAN PATENT APPLICATION

(11) **EP 2 042 975 A1**
(43) Date of publication of application: **01.04.2009**
(21) Application number: 07117559.0
(22) Date of filing: 28.09.2007
(51) Int. Cl.: G06F 3/048

(54) **Touch-screen**

(71) Applicant: NTT DoCoMo, Inc., Tokyo (JP)
(72) Inventor: Lachmund, Sven, 80687, Munich (DE)
(74) Representative: Betten & Resch

(57) **Abstract**

A screen comprising:
a plurality of individual components which are arranged in an array or a matrix, said screen further comprising:
an elevating module for each of said individual components, the elevating module enabling the individual elevation of said components.

## Description

### FIELD OF THE INVENTION

The present invention relates to a screen or a touch screen, particularly a screen or display which gives the user a tactile impression.

### BACKGROUND OF THE INVENTION

Ordinary (touch)screens or displays of (mobile) devices are a plane. When a button, key, or keyboard is displayed, there is no tactile shape and dimension of a button on the display. Just by feeling the display, buttons cannot be located. Not being able to feel the button, which a user wants to press, significantly decreases data input speed compared to an ordinary keyboard. Usability is reduced compared to a normal keyboard where a user can not only look at but also "feel" the keys which helps a user in finding the right key and improves input speed.

If one considers conventional input devices such as keyboards, for usability and fast data input, a user input device, such as a physical keyboard fulfils the following requirements: It has
1. Tactile border, shape and size of a button, and
2. Tactile movement of a button when it is pressed..

Given these requirements a trained user is able to rapidly input data via such a keyboard. For example, the ten finger input system on a QWERTY keyboard illustratively shows that.

If one of these or all the requirements are not met, which is the case for touch screens, data input is slowed down significantly. The user has to watch his input to see if he presses the right place of the touch screen and if he indeed pressed it. The user can only do this sequentially after being visually convinced that the button was pressed. Operating the device without watching it is impossible. This is a serious cut down of usability. Acceptance of input devices on the market can be seriously affected by that.

There are some existing touch screens where visual feedback is given by giving the buttons on the screen a 3D appearance which changes to looking pressed, to indicate the user that the button has been pressed. This, however, again is only a visual impression and no tactile impression.

In another existing touch screen usability is increased by audio feedback. Audible sounds are played when a touch screen button is pressed as confirmation.

While these existing solutions increase usability by giving a feedback to the user, the feedback is only visual and/or audible, and the existing touch screens therefore still lag behind in usability when compared with conventional keyboards.

The above mentioned known solutions give some feedback when a touch screen button is pressed, they still cannot overcome the deficiencies which are inherent to a touch screen, namely the lack of any tactile experience which reflects the shape of a button or key.

It is therefore desirable to provide an improved screen or touch screen.

### SUMMARY OF THE INVENTION

According to one embodiment there is provided a screen or a display for graphically displaying data, said screen or display comprising:
a plurality of individual components which are arranged in a matrix or an array,
said screen or display further comprising:
   an elevating module for each of said individual components, the elevating module enabling the individual elevation of said components.

This makes it possible to provide a tactile impression for the user of said screen which enables the user to identify an input region of said screen not only visually but also based on said tactile impression. This is particularly useful if the screen is a touch screen, but also for other screens or displays it can be useful for the user to have a tactile impression given by the display in addition to the graphical impression.

According to one embodiment each component comprises:
a light emitting module.

In this manner the light emitting module forms a part of the display such that all the components together form the display. Since each component has a corresponding light emitting element, the control of the elevation of the components may be adapted to the pattern displayed by the light emitting elements of the screen.

According to another embodiment, however, the light emitting module may not form a part of the component but there may just be a light emitting module arranged corresponding to the (or each) component, e.g. below or next to (adjacent to) the component to be elevated. If the component is transparent and the light emitting cmodule is arranged below, the light emitted from the light emitting module may pass through the component towards the user's eye, and the tactile impresion may be given by the elevation of the component. If the light emitting module is located adjacent tio the elevatable component, it may be emitted towards the user therefrom According to one embodiment said elevating module comprises one of the following:
a nano-technology device;
a pneumatic device;
a hydraulic device;
a piezo-electric device.

These are possible implementations for the elevating modules.

According to one embodiment each component is provided with a touch sensitive surface.

In this manner each of the components is equipped with a touch sense functionality.

According to one embodiment the screen further comprises a controller which controls the elevation of the components such that it is adapted to the pattern displayed by the light emitting elements..

According to one embodiment such a comprises a controller which controls the elevation of the components such that it is adapted to the pattern displayed by the light emitting elements is provided separate from the screen or display and may be connected thereto.

In this manner a control of the elevation of the components can be performed such that the elevated components in the tactile impression which they give to the user correspond to the shape of input regions or input keys or input buttons which are displayed on the touchscreen.

In this manner the topographic pattern caused by the elevating modules and the pattern displayed by the screen can be made to match with each other and e.g.give the user the feeling similar to a conventional keyboard by the elevated parts resembling in their topography the surface of a keyboard.

According to one embodiment the control of the elevation is made such that the screen provides tactile identification of input widgets such as e.g. buttons and keys, text boxes, radio buttons, check boxes, combo boxes, and others, by lifting corresponding components.

According to one embodiment there is an elevating module corresponding to more than one of the components of said matrix, and said screen further comprises:
a module for directing the elevating movement generated by said elevating module to one or more of said components to which it corresponds such that said
components can be individually elevated or not depending on what is displayed on said screen.

In this manner individual components may be grouped in terms of their corresponding elevating module, while still it being possible for them to be individually elevated.

According to one embodiment the screen is a touch screen and further comprises:
a touch sensitive layer covering the matrix of components.

According to one embodiment the screen further comprises:
a covering foil above the screen to prevent dirt from entering the room between
the components.

This avoids that dirt can enter the matrix.

According to one embodiment said covering foil is fixed to the center of the respective components, or said covering foil is mounted only between the edges of said components.

In this manner it can be assured that the covering foil does not negatively affect the touch sensitive functionality or the elevation of the components and their tactile impression.

According to one embodiment the screen further comprises:
a module for sensing the touching pressure, and for interpreting the sensed
pressure such that only if the pressure lies beyond a certain threshold the
pressure is regarded as having used for pressing a button or a key.

This makes it possible for the user to sense the topographic surface without actually pressing a button or key.

According to one embodiment said touch screen is adapted such that once a key or a button is pressed the elevated components corresponding to said key or button are moved down to make a tactile impression to the user as if a button or a key had been pressed.

The move back downwards once a key is pressed gives the user a tactile feedback for pressing a key and thereby resembles very much the behaviour of a conventional keyboard.

According to one embodiment a touch sensitive layer or a touch sensitive element located under one or more of said components.

This is another way of implementing the touchscreen functionality. The touch sensitive element may comprise a touch sensitive layer or a touch sensitive button.

According to one embodiment the screen has no touch screen functionality but is just a normal display screen with the additional functionality that individual components of the matrix can be elevated in accordance with the pattern being displayed on the screen.

### DESCRIPTION OF THE DRAWINGS

Fig. 1 schematically illustrates a matrix of components according to an embodiment of the invention.
Fig.2 schematically illustrates the matrix of Fig. 1 with some components being elevated.
Fig. 3 schematically illustrates a component according to an embodiment of the invention.
Fig. 4 schematically illustrates a component according to a further embodiment of the invention.
Fig. 5 schematically illustrates a display matrix according to an embodiment of the invention.
Fig. 6 schematically illustrates a part of a display according to an embodiment of the invention.
Fig. 7 schematically illustrates a component according to a further embodiment of the invention.

### DETAILED DESCRIPTION

In the following there will be described embodiments of screens or displays according to embodiments of the invention by referring to the accompanying drawings.

A screen or a display in accordance with the embodiments of the invention is a device which is capable of graphically displaying data. The data may be inputted into the screen or display by some other device like a computer, a TV receiver, a mobile phone or any other device capable of outputting graphical data to be displayed by a display or a screen.

According to embodiments of the invention a screen or a display comprises some module or mechanism to provide a user with a controllable tactile impression. This tactile impression thereby according to an embodiment is controllable such that it corresponds to the data displayed on the screen.

According to one embodiment there is provided a screen which can change its shape by lifting up parts so that the user feels when touching the screen that there is something that looms out of the plane of the touch screen. This can be used to mark the border of buttons or to mimic the three-dimensional shape of buttons or keys. The user can feel where a button is and where it ends, or he may feel the "shape of a button" or the "shape of a key". In this manner the user not only can rely on what he sees on the screen to locate a button or key, but he can also use his tactile sense to identify the keys or buttons on the screen. For example, a user may in this manner input data using the ten finger system like with a normal keyboard of a computer, or he may - depending on what kind of input menu or buttons the screen presents to him - adapt such that he can without looking onto the screen select the keys or buttons for making an input.

In other words, when a button or a keyboard is displayed on the screen, the user can not only see but also feel the borders of the keys. He can type without being forced to look at the screen, and this increases data input speed and thus usability and acceptance of the device.

According to one embodiment the screen (which may be a touch screen) or display is designed such that it can change the shape of its surface. It is no longer a plane. Parts of the screen can be lifted or elevated so that there is a tactile difference compared to the rest of the screen. This can be used to mark the border of a button, displayed on the screen.

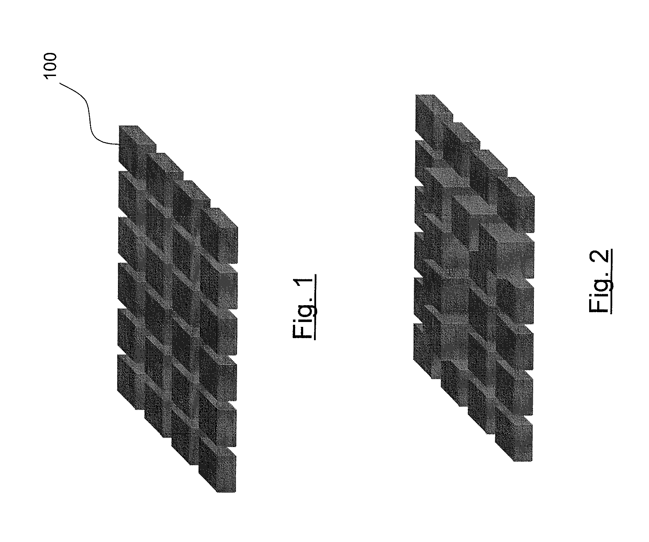

According to one embodiment a touch screen consists of individual components (100) of which each represents one pixel (or a group of pixels) of the screen. Fig. 1 schematically illustrates such a touch screen with its multiple components 100 which are arranged in form of a matrix as shown in Fig. 1.

According to one embodiment the individual components each correspond to a pixel of a touch screen. According to a further embodiment the components may correspond to a group of pixels.

For each of the components shown in Fig. 1 according to one embodiment there is provided a lifting mechanism or lifting module or an elevating module which can be controlled to elevate its individual component 100 such that the component sticks out of the plane. This is schematically illustrated in Fig. 2, where in total seven components 100 have been elevated and form the shape of an "L".

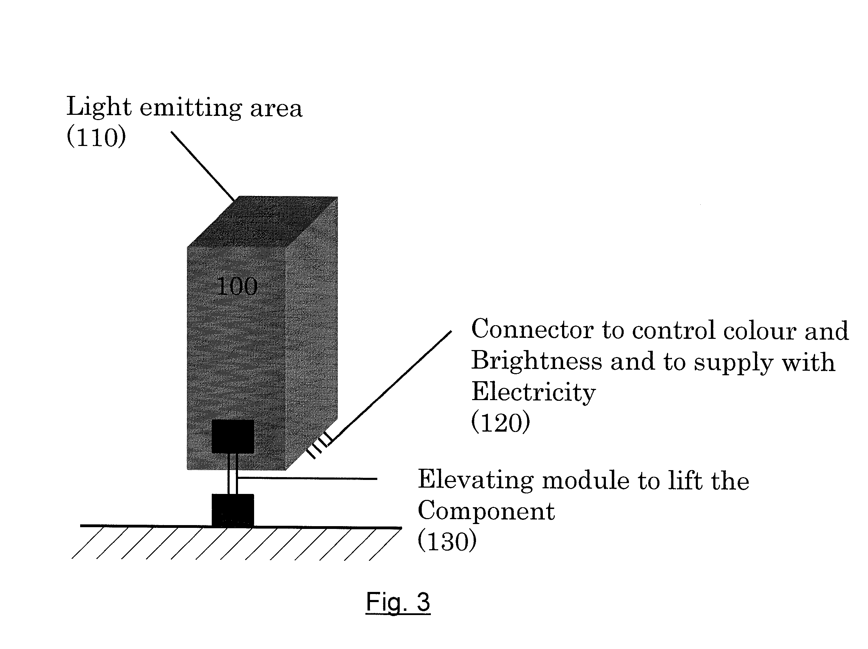

According to one embodiment an individual component as shown in Fig. 3 may be equipped with some light emitting module 110, which in one embodiment comprises all the technical facilities to display an arbitrary colour with an arbitrary brightness. The component in one embodiment is suitably small to resemble the size of a pixel of today's flat screens, such as a TFT screen. However, each of these components according to one embodiment can be individually controlled by the display controller to set colour and brightness, the pixel has to show. For that purpose there is provided also a connector 120 to connect to said controller, and the connector 120 in one embodiment may also be used for providing for electrical power (120). Light Emitting Diodes (LED) can be used as light emitting modules, for example, but other techniques are also possible.

For implementing the elevating module, according to one embodiment each of the components is equipped with a nano-technology device 130 which can move the component perpendicular to the display plane. A nano-technology electric motor (e.g. a linear motor using nanotechnology) is used for this purpose. However, other techniques, such as pneumatics or hydraulics, can be used as well. Another option to implement the elevating device would be to use a piezo crystal which makes use of the piezo effect and expands or contracts depending on the voltage which is applied. With such a piezo-electric device a linear motor or a linear driver can be implemented as well.

The range for the movement which should be achieved depends on the field of application. For a touch screen, one or two millimetres, possibly even less such as e.g. 100 micron would be sufficient. According to one embodiment the elevation amount corresponds to at least 10 micron, according to a further embodiment it is at least 50 micron, 100 micron or 200 micron.

According to one embodiment the amount by which a component is elevated is always the same for an elevated component. According to a further embodiment, however, the amount by which the component is elevated can be controlled such that the amount of elevation can be controllably varied. In this manner a more complex topography can be generated.

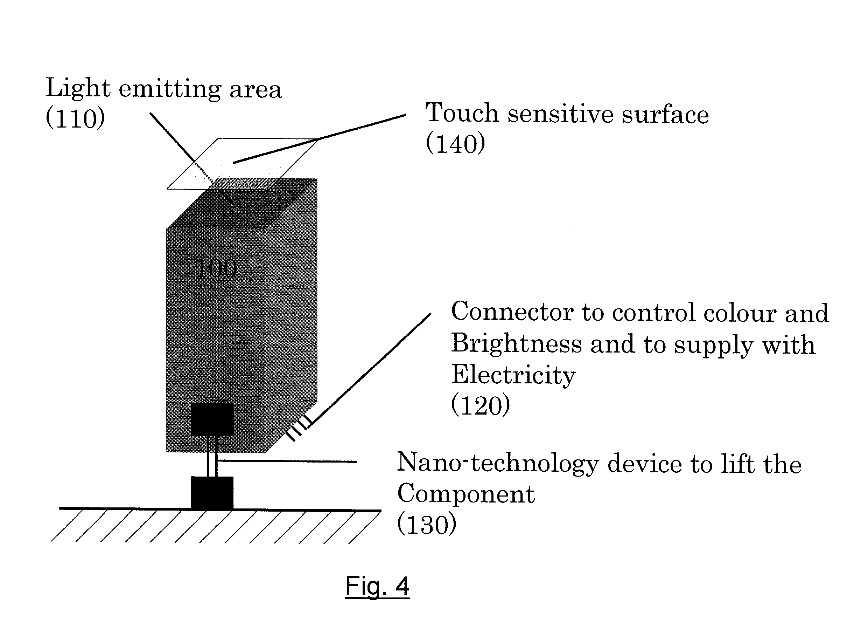

To implement the touch screen functionality, according to one embodiment each component is equipped with a visually transparent touch sensitive surface 140 as schematically illustrated in Fig. 4. In this embodiment each individual component forms a kind of a single individual touch screen, which if being touched signals that the part of the overall matrix forming the full touch screen where the individual component is located has been touched by the user.

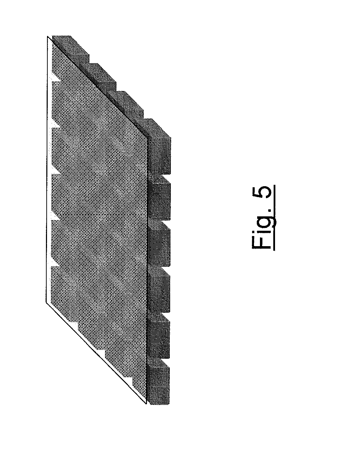

According to a further embodiment there is provided a touch sensitive layer above the entire display, as schematically illustrated in Fig. 5.

As shown in Figures. 1, 2 and 5, when placing many of the individual components 100 shown in Fig 3 or 4 and as described before next to each other in two horizontal dimensions, there is a matrix of individual pixels, which builds the screen.

To let the user feel a button that is displayed on the screen, the components that display the border of the button (or the entire button) can be lifted. Thus, a lifted rectangle (assuming the button is of rectangular shape) can be touched. Any other shape can be produced, of course, as any combination of components can be lifted. Fig. 2 shows an example of a pattern of some elevated components that are lifted up and that form the shape of an "L".

According to one embodiment there is provided a controller which controls which components are to be elevated and which are not. In one embodiment the controller generates the control signals for the elevating modules such that those components are elevated where there are located input regions such as buttons or keys. The controller may use predetermined patterns of elevation which correspond to the respective patterns which are displayed on the display. E.g. if a normal QWERTY keyboard is displayed on the screen the controller may control the components such that the elevated components resemble or reflect the shape of the keys of the QWERTY keyboard. On the other hand, if the screen displays something else, e.g. some pattern with input buttons having a shape which is different from the shape of the keys of the normal keyboard, the controller may use another controlling pattern such that the elevated components correspond to the shape of the buttons which are displayed on the touch screen.

More generally speaking, according to one embodiment the controller controls the elevating components such that the elevated components in the tactile impression which they give to the user correspond to the shape of input regions or input keys or input buttons which are displayed on the touchscreen.

Besides buttons and keys, displays can also show other input widgets, such as text boxes, radio buttons, check boxes, combo boxes, and others. Due to the flexibility of being able to control lifting of each component 100, it is also possible to provide tactile identification of these widgets, by lifting corresponding components.

Further modifications of the embodiments described before are also possible. E.g. instead of equipping each component with its individual elevating module (e.g. a nano-technology device or a piezo-electric device) to lift it, there could also be a device that can lift them all, while being able to individually control their lifting. The individual controlling of the individual components in such a case may be performed by appropriate techniques which are chosen that can transport the movement, produced by the device, to the component that is to be lifted or to be lowered..

E.g. by means of some mechanical or mechano-electrical gear the movement of a driving unit (the elevating unit) is suitably transferred to the individual components.

In one embodiment the transmission may be made by some hydraulic or pneumatic arrangement. E.g. below the matrix shown in fig. 1 there may be provided a set of channels and valves within some lower layer. This lower layer provided below the matrix may be hollow but impermeable for liquid and air. It may contain a network of channels and valves which can be opened and closed and which to some extent corresponds to the arrangement of the components such that the liquid contained in the lower layer may be directed through the channels and valves to individual locations corresponding to individual components 100 of the matrix. At such an individual location the lower layer may be deformable towards the upward direction (in the direction of the corresponding matrix element 100) such that if the liquid or air is guided to this location the lower layer deforms towards the upward direction and thereby elevates the corresponding component 100. The guiding of the liquid or air may be done by the mentioned channel and valve system in connection with some driving mechanism such as a pump.

It will be understood that such a mechanism, despite providing in total only one "elevating module" still provides an elevating module for each of the components (one and the same for all of them) but which is built such that the components can be controlled and elevated individually corresponding to what is displayed on the screen at the location of the individual components.

Instead of having a touch sensitive surface on each component, there is a touch sensitive layer above the entire display that is not connected to the individual component. In that case, the display controller knows which component is situated at which co-ordinate of the touch sensitive layer to link a certain place of the touch sensitive layer with the component(s) at the same place below. Thus it is guaranteed that if a place on the screen is marked as a button, the same place will be accepted as a button being pressed by the touch sensitive layer. Fig. 5 illustrates such a construction.

Somewhat more generally speaking one may summarise this embodiment such that there is an elevating module which corresponds to more than one of the components of the matrix. The screen then just comprises additionally some module for directing the elevating movement generated by said elevating module to one or more of said components to which it corresponds such that said components can be individually elevated or not depending on what is displayed on said screen. The directing module may be implemented by the aforementioned channel system inside a lower layer the upper part of which is deformable as described already.

As schematically illustrated in Fig. 5, according to one embodiment there is provided a touch sensitive layer covering the matrix of components.

The touch sensitive layer in this embodiment preferably is constructed in a way that it can follow local changes in the surface of the display. That means, if some components are lifted, the user must be able to feel that these components are lifted, while others are not. In other words, the layer should follows in its shape the shape of the surface of the display.. This may be achieved by choosing the material for the layer accordingly.

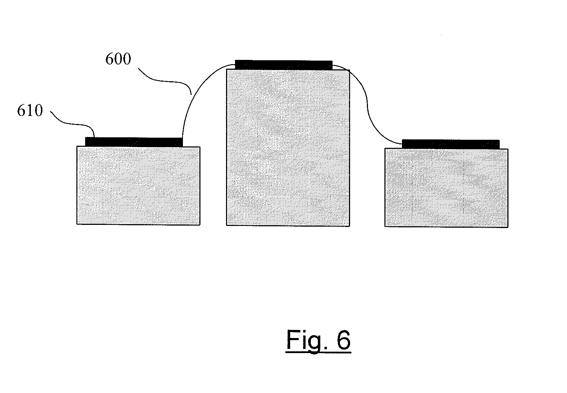

According to one embodiment the material of the covering layer may be elastic to some extent, and the covering layer may at the location of each component be fixed to the component. The area of fixation may thereby be smaller than the surface area of the component. Still in such a case the covering layer would follow the shape of elevated and non-elevated components as necessary, because at the center of the component 100 it is fixed to the component and at the intermediate region between two components it is not fixed and due to its elastic property follows the topography of the partly elevated matrix. Such an embodiment is schematically illustrated in Fig. 6 where the covering layer 600 is fixed to the components at regions 610 located in the center of their top surface, and where between the components the covering layer follows the shape of the topography.

According to one embodiment, to ease construction and/or to spare manufacture costs, it may make sense to combine a small number of components to a group that is always lifted or lowered together. This particularly may make sense if one component corresponds to one pixel of the screen. In such a case a combination of a plurality of pixels (components) may then again be itself regarded as one component which can be individually elevated. In this case, the component formed by a group of components has one elevating module (such as a nano-technology device) that is mounted to all components of the group, instead of having one nano-technology device per individual component

As one example, a group size that would make sense for a mobile device with reasonable high resolution and small component size (where in this case an component corresponds to a pixel) might be a matrix of 2 times 2 or 3 times 3 components Any other shape is, however, also possible.

According to one embodiment, if each component has its own touch sensitive surface, it may be practical to have a thin foil above the entire screen to prevent dirt from entering the room between the components. In this case, such a foil preferably has the same properties to follow the shape or the topography of the display as discussed previously in connection with Fig. 6. This foil could either cover the entire screen, or if this hinders touch recognition by the underlying touch sensitive surface, it could only be mounted between the edges of all the components 100. In the latter case, the touch sensitive surface on top of the component 100 is directly accessible and not covered, whereas at the edges there is the foil to prevent dirt from entering the room between the components. In this case, the arrangement of the touch sensitive surface and the foil would be similar to the description of Fig. 6, where in this embodiment, the touch sensitive surface is mounted on the component (similar to 610 in Fig. 6), and the foil is mounted between the touch sensitive surfaces of the neighbouring components (similar to 600 in Fig. 6).

According to one embodiment, to provide a better comfort for the user, there is provided a way to distinguish between just touching the screen and pressing a button on the screen. If the user shall be given the chance to touch the screen to feel the boundary of buttons (or the buttons) to feel where the one is, and if the user actually does not want to press but just wants to feel the topography, such a touch shall not be recognised as pressed button.

Instead there should rather be a stronger pressure required so that the user can deliberately press the button after he identified the right one by touching it before.

This means that there is provided some module for measuring or sensing the touching pressure, and for interpreting the sensed pressure such that only if the pressure lies beyond a certain threshold the pressure is regarded as having used for pressing a button or a key.

There are different technologies to implement such a touch screen with a threshold pressure. One possibility is to have a foil above the screen that is mounted with a small distance. If the user just touches the foil, nothing happens yet. If the user presses the foil so that it touches the screen, the screen controller can figure out, at which place of the screen the foil touches the screen, and this is then recognised as press.

This technique is suitable, but others with similar properties are as well. It should be noted, however, that this technique should be applied such that there is one touch sensitive surface element for each component spaced apart from the component. Otherwise it would be difficult for the screen to follow the topography given by the elevating components while at the same time keeping a distance between the components and the touch sensitive surface.

As a further variant, instead of having this touch screen layer that requires physical press above the components that are lifted, there could also be the light emitting component and the touch sensitive layer fixed on the device that contains the display, and the liftable parts of the component are mounted above.

As a further variant, instead of having a touch sensitive screen layer that requires physical press above the components that are lifted, there could also be the touch sensitive layer or touch sensitive elements below the component. This arrangement in one embodiment is made such that if the user presses the component physically, the component is moved down and the touch sensitive layer or touch sensitive button recognises the press. The touch sensitive functionality in such an embodiment can be implemented by a layer extending over an area covering more than one components, or as a physical button (e. g. like a physical button on a mobile phone) which then in one embodiment would correspond to one component such that there is a touch sensitive button for each component. In one embodiment it can then be recognised when the physical button touches the counterpart mounted below. Instead of having a physical button, the entire component is mounted, replacing the button

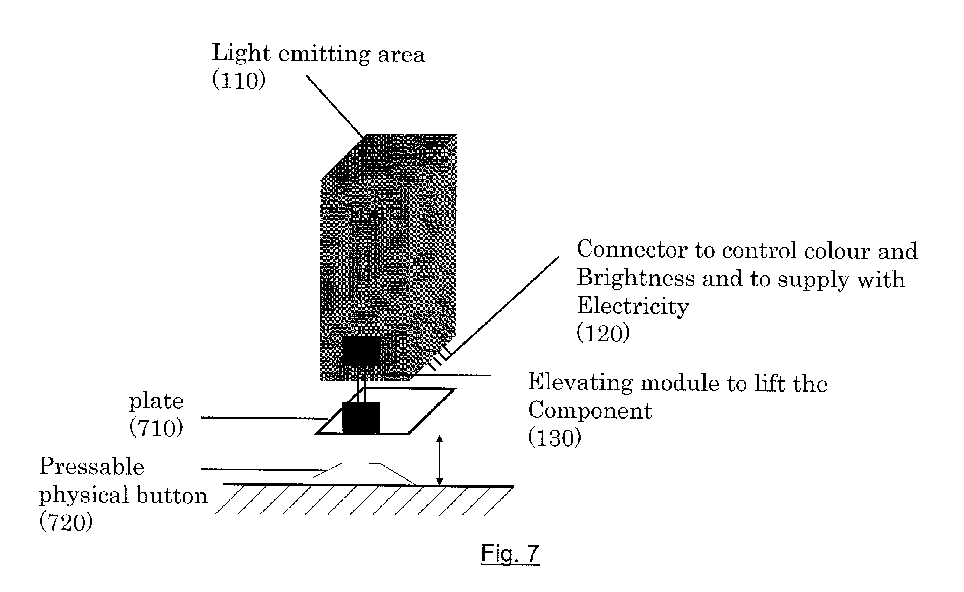

Fig. 7 illustrates such a setting. The component 100 is mounted on the plate 710.

If the entire component is pressed by the user, it is moved downwards and the plate touches the pressable physical button 720. This is recognised as user input and the controller can determine which area of the screen was pressed by the user. The pressable physical button 720 can be implemented either the way that there is a physical button implemented and the above mounted component presses it, or press is already recognised, when the plate 710 touches the physical pressable button 720. In such an embodiment the user is required to physically press the component when he wants to press a button displayed on the screen.

According to one other embodiment the plate 710 of Fig. 7 is for mounting thereupon the components such that they may be depressed, and below them there is mounted a touch sensitive layer which when the component is pressed down and gets into contact with the component recognises it.

According to one embodiment the touchscreen is adapted such that once a key or a button is pressed, the elevated components corresponding to said key or button are moved down to make a tactile impression to the user as if a button or a key had been pressed. E.g. if a user presses the button "k" on a keyboard, once the screen registers a pressing of this key, the controller for the elevating modules controls them such that those modules which correspond to the key "k" and which are causing the topographic pattern of a key at the location of key "k" are put into such a state that the corresponding components are moved down. The user who has his hand or finger on that location then gets the tactile impression that the key "k" has been pressed".

This impression may last for a predetermined time, or it may last as long as the pressure is being applied.

It will be readily apparent for the skilled person that further modifications of the embodiments described before can be made.

For example, according to one further embodiment said touch has no screen functionality at all (therefore it actually is not anymore a touch screen) but is just a normal display screen with the additional functionality that individual components of the matrix can be elevated in accordance with the pattern being displayed on the screen. This even without the touchscreen functionality may be appealing for the user by the possibility to have a tactile impression in addition to the merely visual impression of the images displayed on the screen. In such an embodiment the elevation may not only be used to indicated the shape of buttons or keys but may take different forms and may be chosen as desired to match with the visual pattern on the display. Just as one example one could imagine that the screen displays a map with some hills or mountains, and at the location of a hill of a mountain the components may be elevated. Another example for using that kind of display is to display Braille text, which enables blind people to feel the displayed text.

The screens or displays which have been described in the foregoing may be used to display any kind of data graphically, such as e.g. TV images, data from a computer or the data to be displayed by any other device such as e.g. a mobile phone.

## Claims

1. A screen comprising:
a plurality of individual components which are arranged in a matrix or an array, said screen further comprising:
an elevating module for each of said individual components, the elevating module enabling the individual elevation of said components.

2. The screen of claim 1, wherein each component comprises:
a light emitting module.

3. The screen of claim 1 or 2, wherein said elevating module comprises one of the following:
a nano-technology device;
a pneumatic device;
a hydraulic device;
a piezo-electric device.

4. The screen of one of claims 1 to 3, wherein said screen is a screen and each component is provided with a touch sensitive surface.

5. The screen of one of claims 1 to 4, further comprising a controller which controls the elevation of the components such that it is adapted to the pattern displayed by the light emitting elements of the screen.

6. The screen of one of claims 1 to 5, wherein elevation is made such that the screen provides tactile identification of input widgets

7. The screen of one of claims 1 to 6, wherein there is an elevating module corresponding to more than one of the components of said matrix, and said screen further comprises:
a module for directing the elevating movement generated by said elevating module to one or more of said components to which it corresponds such that said components can be individually elevated or not depending on what is displayed on said screen.

8. The screen of one of claims 1 to 7, further comprising:
a touch sensitive layer covering the matrix of components.

9. The screen of one of claims 1 to 8, further comprising:
a covering foil above the screen to prevent dirt from entering the room between the components..

10. The screen of one of claims 1 to 9, wherein said covering foil is fixed to the center of the respective components, or said covering foil is mounted only between the edges of said components.

11. The screen of one of claims 1 to 10, further comprising:
a module for sensing the touching pressure, and for interpreting the sensed pressure such that only if the pressure lies beyond a certain threshold the pressure is regarded as having used for pressing a button or a key.

12. The screen of one of claims 1 to 11, wherein said touchscreen is adapted such that once a key or a button is pressed the elevated components corresponding to said key or button are moved down to make a tactile impression to the user as if a button or a key had been pressed.

13. The screen of one of claims 1 to 12, further comprising:
a touch sensitive layer or a touch sensitive element located under one or more of said components.

## Amended claims

### Amended claims in accordance with Rule 137(2) EPC.

**1.** A screen comprising:
a plurality of individual components which are arranged in a matrix or an array, said screen further comprising:
an elevating module for each of said individual components, the elevating module enabling the individual elevation of said components
wherein each component comprises:
a light emitting module corresponding to a pixel of the screen,
a connector for receiving a control signal, said componend being capable to display an arbitrary colour with an arbitrary brightness in accordance with a control signal received by said connector.

**2.** The screen of claim 1, wherein said elevating module comprises one of the following:
a nano-technology device;
a pneumatic device;
a hydraulic device;
a piezo-electric device.

**3.** The screen of one of claims 1 to 2, wherein said screen is a screen and each component is provided with a touch sensitive surface.

**4.** The screen of one of claims 1 to 3, further comprising a controller which controls the elevation of the components such that it is adapted to the pattern displayed by the light emitting elements of the screen.

**5.** The screen of one of claims 1 to 4, wherein elevation is made such that the screen provides tactile identification of input widgets

**6.** The screen of one of claims 1 to 5, wherein there is an elevating module corresponding to more than one of the components of said matrix, and said screen further comprises:
a module for directing the elevating movement generated by said elevating module to one or more of said components to which it corresponds such that said components can be individually elevated or not depending on what is displayed on said screen.

**7.** The screen of one of claims 1 to 6, further comprising:
a touch sensitive layer covering the matrix of components.

**8.** The screen of one of claims 1 to 7, further comprising:
a covering foil above the screen to prevent dirt from entering the room between the components.

**9.** The screen of one of claims 1 to 8, wherein
said covering foil is fixed to the center of the respective components, or
said covering foil is mounted only between the edges of said components.

**10.** The screen of one of claims 1 to 9, further comprising:
a module for sensing the touching pressure, and for interpreting the sensed pressure such that only if the pressure lies beyond a certain threshold the pressure is regarded as having used for pressing a button or a key.

**11.** The screen of one of claims 1 to 10, wherein said touchscreen is adapted such that once a key or a button is pressed the elevated components corresponding to said key or button are moved down to make a tactile impression to the user as if a button or a key had been pressed.

**12.** The screen of one of claims 1 to 11, further comprising:
a touch sensitive layer or a touch sensitive element located under one or more of said components.
